Europäisches Patentamt

European Patent Office

Office européen des brevets

(11) Numéro de publication: **0 305 287 B1**

# (12) FASCICULE DE BREVET EUROPEEN

(45) Date de publication de fascicule du brevet: **21.10.92**  (51) Int. Cl.⁵: **H04N 3/12**

(21) Numéro de dépôt: **88402143.7**

(22) Date de dépôt: **23.08.88**

(54) **Système de visualisation d'image couleur sur écran matriciel.**

(30) Priorité: **28.08.87 FR 8712039**

(43) Date de publication de la demande:
**01.03.89 Bulletin 89/09**

(45) Mention de la délivrance du brevet:
**21.10.92 Bulletin 92/43**

(84) Etats contractants désignés:
**DE GB IT NL**

(56) Documents cités:
**FR-A- 2 536 565**
**US-A- 3 821 721**
**US-A- 3 845 243**
**US-A- 4 063 231**

(73) Titulaire: **THOMSON-CSF**
**51, Esplanade du Général de Gaulle**
**F-92800 Puteaux(FR)**

(72) Inventeur: **Perbet, Jean-Noel**
**THOMSON-CSF SCPI 19, avenue de Messine**
**F-75008 Paris(FR)**
Inventeur: **Bossoutrot, Pierre**
**THOMSON-CSF SCPI 19, avenue de Messine**
**F-75008 Paris(FR)**
Inventeur: **Geneste, Philippe**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

Rank Xerox (UK) Business Services

## Description

La présente invention concerne un système de visualisation d'image en couleur sur un écran matriciel, par exemple à cristal liquide. L'invention s'adresse plus particulièrement à la visualisation d'image synthétique mais s'applique également pour des images issues de capteurs vidéo d'images, par exemple d'une caméra vidicon.

L'invention concerne plus particulièrement un traitement d'image adapté en vue de l'affichage sur un écran matriciel. Ce traitement particulier produit une première fonction de lissage et d'adoucissement des contours sans perte d'adressabilité et également une homogénéisation de la répartition spatiale dans l'écran ; il en résulte une amélioration de la qualité de l'image et du confort visuel pour l'observateur.

Un des problèmes rencontrés pour les écrans matriciels est la restitution d'image synthétique ou provenant de capteur vidéo, sur ces structures discrétisées.

Ces écrans sont constitués d'une matrice de points élémentaires pouvant être adressés individuellement par deux réseaux orthogonaux d'électrodes correspondant respectivement aux lignes et aux colonnes. Dans le cas d'un écran à cristal liquide, celui-ci est disposé en sandwich entre les deux réseaux d'électrodes ; en outre, des filtres colorés séparés par des bandes opaques sont disposés du côté visualisation pour obtenir les couleurs fondamentales : rouge, vert et bleu, désignées en abrégé R,V et B. Un trio RVB est relatif à un point couleur. Il y a lieu de distinguer le point image correspondant à une information issue du générateur d'image (processeur graphique, capteur), et stockée ou non dans une mémoire d'image, du point élémentaire de l'écran le plus souvent appelé pixel et qui correspond à la plus petite unité adressable de l'écran. Un trio comporte ainsi trois pixels.

Généralement la taille d'un pixel est inférieure au pouvoir séparateur de l'oeil et l'on doit alors considérer non plus un point élémentaire, mais une plage constituée d'un ensemble de ces points juxtaposés.

L'invention s'applique à ce mode d'observation de l'écran suivant lequel un point image élémentaire à visualiser est affiché sur une plage de pixels de l'écran matriciel.

La plage est caractérisée par de nombreux paramètres, essentiellement par sa position, sa forme, sa luminosité, sa couleur, la disposition des pixels colorés, etc.

Une image donnée peut donc être considérée constituée par un ensemble de plages dont les caractéristiques peuvent varier en fonction de divers paramètres, tels que : nature du tracé (trait, plage de couleur, surface colorée, caractère alphanumérique, etc. ), élément provenant d'un capteur d'image, etc.

La technique utilisée permet donc d'adapter la restitution de l'image en fonction notamment : de la nature de l'image (s'il s'agit d'une image synthétique ou provenant d'un capteur), du type d'écran matriciel, de la répartition des pixels couleur (triplés, quadruplés), des défauts de l'écran, des conditions d'observation de l'image (de jour ou de nuit).

Un autre objet de l'invention est d'obtenir des demi-teintes (encore appelées teintes de gris).

Selon l'invention il est réalisé un système de visualisation d'image couleur sur écran matriciel, comportant :

. des moyens de gestion et de commande d'un ensemble groupant :
- un générateur de l'image à visualiser,
- une mémoire d'image pour stocker l'image à visualiser,
- des moyens de balayage pour commander l'extraction de l'image de la mémoire selon un balayage matriciel déterminé en X et Y,
. des moyens de traitement de l'image extraite,
. et des moyens de visualisation de l'Image traitée sur un écran matriciel,

caractérisé en ce que lesdits moyens de gestion et de commande et ceux de traitement sont déterminés de manière que le balayage matriciel s'effectue avec prise en compte, pour chaque point image à visualiser, des données stockées pour une petite zone de l'image, dite microplage, formée d'un nombre $n$ au moins égal à trois de pixels en X et d'un nombre $m$ au moins égal à trois de pixels en Y, ledit point image à visualiser étant affiché sur l'écran matriciel dans une position centrée sur les coordonnées du point image à visualiser et sous forme d'une plage de plusieurs pixels.

Il est à noter par ailleurs qu'il est connu par les documents US-A-3 845 243 et US-A-4 063 231 d'effectuer un affichage sur écran en ne considérant plus les pixels pris séparément mais des zones de n x n pixels, avec n au moins égal à 2, ces zones étant juxtaposées c'est-à-dire sans recouvrement. Ainsi, contrairement à la présente invention où chaque pixel est concerné par m x n microplages, dans ces documents un pixel n'est concerné que par une seule microplage pour sa commande ; une telle technique donne les effets contraires à ceux obtenus grâce à l'invention et indiqués dans le deuxième paragraphe de ce texte.

Les particularités et avantages de la présente invention apparaîtront dans la description qui suit donnée à titre d'exemple, à l'aide des figures annexées qui représentent :

- Fig 1, un schéma général d'un système de visualisation conforme à l'invention ;
- Fig.2a,2B,2C, des exemples de définition de plage pour des matrices couleur avec disposition respective en diagonale, en ligne, et quad des pixels RVB.
- Fig.3A,3B et 3C, la répartition de pixels correspondant à la plage selon la figure 2A respectivement pour le vert,le rouge et le bleu, pour obtenir des niveaux de luminosité de 33, 67 ou 100% de la couleur considérée ;
- Fig 4, un diagramme d'une réalisation de système selon la figure 1 montrant la découpe fonctionnelle du processeur vidéo déterminant la microplage ;
- Fig 5, un diagramme du générateur d'adresses utilisé dans le cas de la figure 4 ;
- Fig.6 un diagramme du circuit d'insertion de la microplage dans la réalisation selon la figure 4.

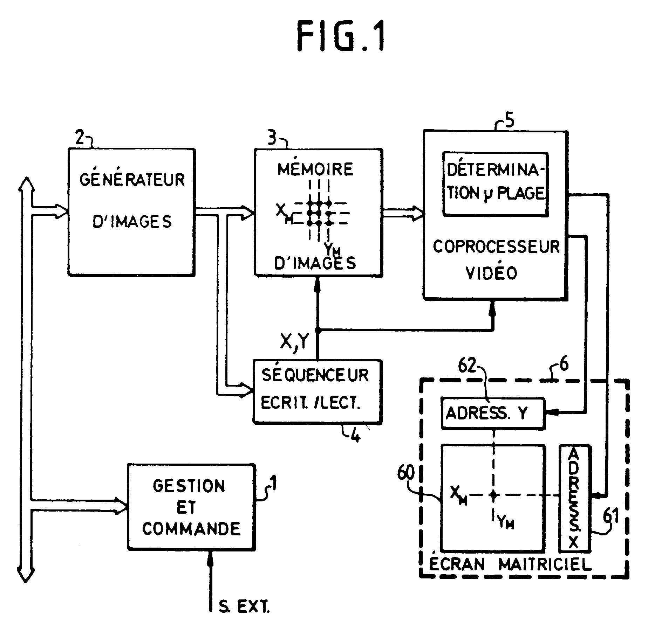

En référence à la figure 1, le système se compose d'un circuit de gestion et de commande 1, par exemple un ensemble microprocesseur, pouvant recevoir des signaux de commande extérieur $S_{ext}$ et qui est relié par un bus à un générateur d'image 2 lui-même relié à une mémoire d'image 3 et à un dispositif séquenceur d'écriture-lecture 4 c'est-à-dire de balayage ou d'adressage. La sortie de la mémoire d'image 3 est connectée au circuit d'adressage de l'écran à travers un ensemble de traitement ou coprocesseur vidéo 5. L'écran matriciel 6 comporte l'écran proprement dit 60 et les circuits d'adressage ligne 61 et d'adressage colonne 62. La mémoire d'image 3 permet de stocker l'image à visualiser produite par le générateur d'image 2. Le circuit séquenceur 4 commande l'extraction de l'image de la mémoire selon un balayage matriciel déterminé en X et en Y.

Selon l'invention le système et, en particulier, les circuits de gestion et de commande 1, de traitement 5 et de balayage 4 sont déterminés en sorte que le balayage matriciel s'effectue en considérant, pour chaque point image à visualiser, les données stockées selon plusieurs pixels en X et plusieurs pixels en Y dans la mémoire 3. En appelant m et n respectivement le nombre de pixels prélevés en X et en Y, la zone stockée de l'image dite "microplage" formée par les n.m pixels est utilisée pour former le point image à visualiser. La microplage prise en compte est sensiblement centrée sur les coordonnées $X_M$ $Y_M$ d'un point M image à visualiser. Les valeurs n et m sont déterminées au moins égales à trois pixels respectivement en X et en Y. Dans l'exemple n=m=3 on obtient une microplage minimale de neuf pixels, le pixel central correspondant aux coordonnées $X_M$ et $Y_M$ du point image à visualiser.

Le passage au point suivant d'abscisse $X_{M+1}$ peut se faire dans les conditions habituelles, c'est-à-dire avec une résolution égale à un pixel. Il n'y a ainsi aucune perte d'adressabilité.

La microplage peut être rectangulaire, carrée, ou de forme quelconque. Elle peut être de dimensions fixes (m et n constants) ou variables (m et n variables). La microplage est déterminée par le processeur vidéo et le circuit de gestion et de commande 1 en fonction de différents paramètres relatifs à la nature de l'image (image alphanumérique, synthétique ou provenant d'un capteur vidéo ou autre ...), de la nature de l'écran (répartition des pixels couleur dans l'écran, directivité de l'émission), de l'état de l'écran (défauts présentés par l'écran), de la définition (nombre de points dans l'image), des informations relatives au tracé (coordonnée en X et Y, couleur, luminosité, nature c'est-à-dire trait ou surface, etc...).

L'image est traitée par plages, chaque plage étant constituée d'un nombre égal d'éléments d'image rouge (R), vert (V), ou bleu (B), dont la répartition et le nombre dépendent de la structure d'écran considéré (arrangement des filtres colorés). La taille de la plage est déterminée en fonction du pouvoir séparateur de l'oeil qui est d'une minute d'angle environ et de la distance d'observation.

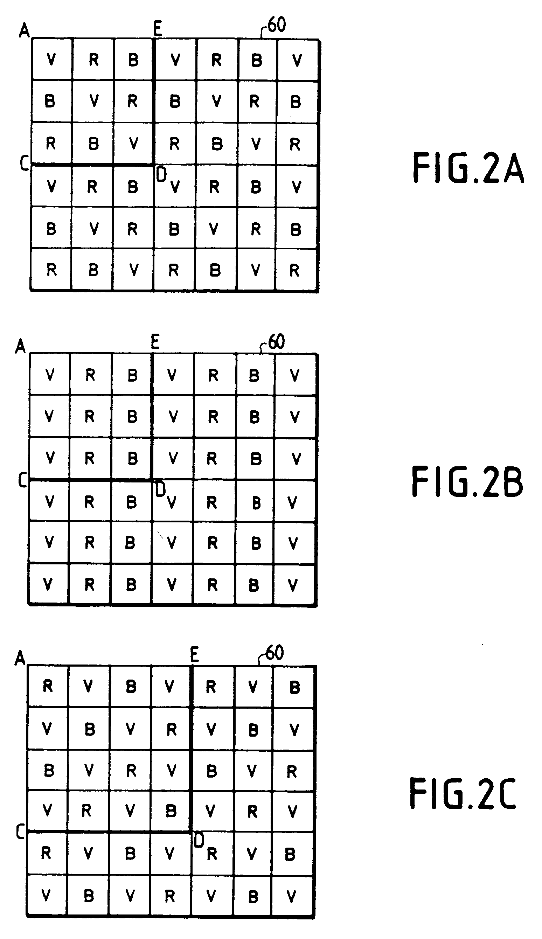

En référence à la figure 2, on considère à titre d'exemple une image de format rectangulaire ACDE réalisée sur un écran ayant des filtres en diagonale selon la figure 2A. La cellule élémentaire la plus petite est constituée de 3x3 éléments d'image ou pixels de forme carrée. Ces plages peuvent de plus se recouvrir en étant décalées d'un seul pixel ; on ne modifie donc pas la précision d'adressage de l'écran.

Les figures suivantes 2B et 2C indiquent cette plage élémentaire minimale pour des configurations respectivement en ligne et en quad. La forme de la plage peut être différente pour des images de format différent, par exemple dans le rapport 3/4 pour un format rectangulaire.

La figure 3A donne différentes configurations possibles dans la plage selon la figure 2A avec disposition en diagonale pour le vert et avec différents pourcentages de luminosité de couleur pure. En allumant un seul pixel comme indiqué à la partie supérieure, on obtient un pourcentage de 33%. En allumant deux pixels selon les trois variantes possibles représentées sur la ligne intermédiaire, on obtient environ 67%. En allumant les trois pixels du vert en diagonale on obtient le rendement de 100% pour cette couleur.

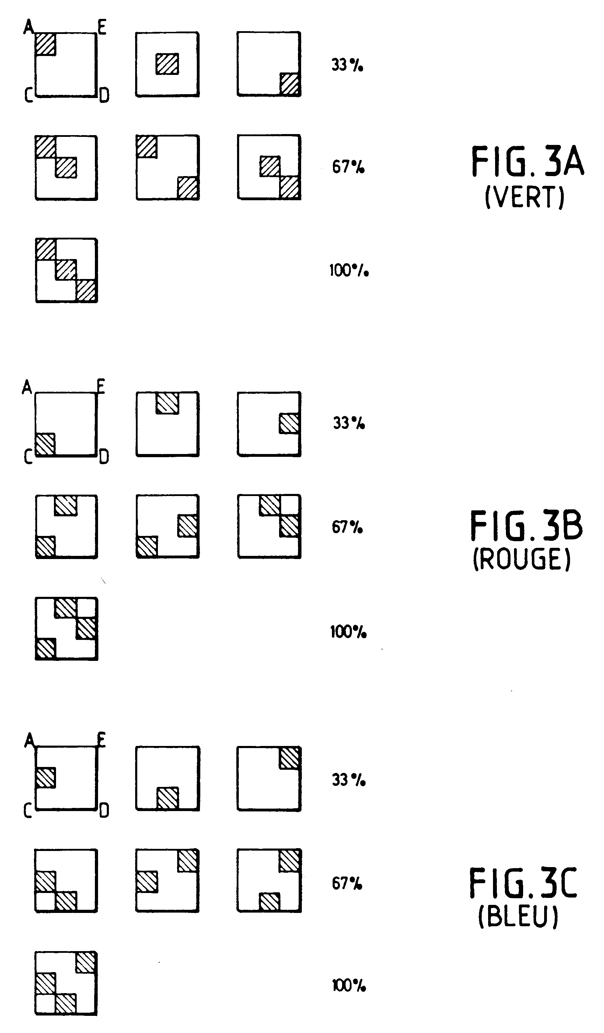

Les figures 3B et 3C montrent également ces variations de luminosité dans le cas des deux autres couleurs, le rouge et le bleu respectivement.

On a donc réalisé des niveaux de luminosité différents tout en gardant au niveau du cristal liquide une tension maximale et donc un angle de vue maximal. Les états 33% et 67% correspondent à des états intermédiaires dits de gris ou demi-teintes, et en définitive on obtient une palette de couleur plus riche et qui est fonction du nombre de pixels colorés compris à l'intérieur de la plage.

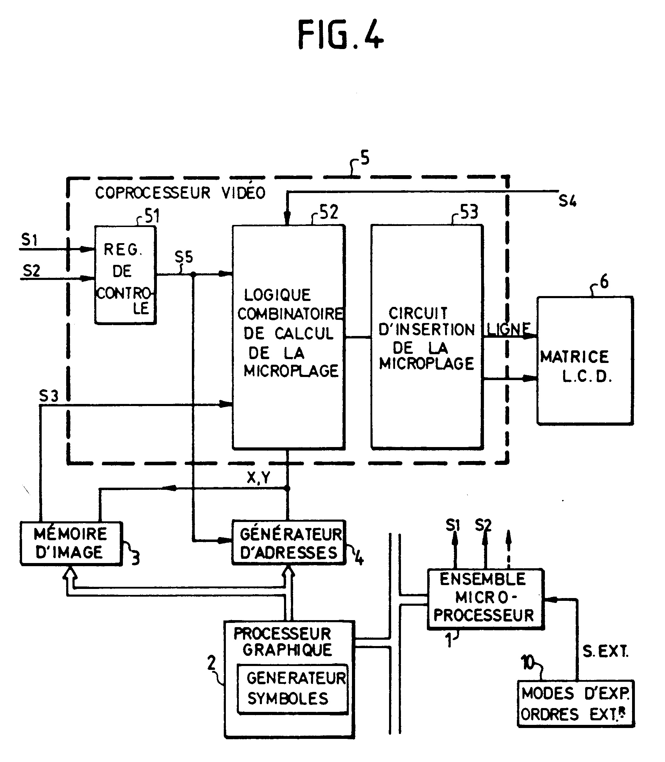

La figure 4 représente plus en détail une réalisation du coprocesseur vidéo 5. On considère dans cet exemple une vidéo synthétique fournie par un processeur graphique 2 et stockée dans la mémoire d'image 3. Les signaux extérieurs Sext sont des signaux relatifs au choix, au mode d'exploitation et aux ordres divers fournis par l'utilisateur, ces fonctions étant symbolisées par le bloc 10.

Le coprocesseur vidéo 5 qui permet de définir la microplage se compose d'un circuit registre de contrôle 51 dont le signal de sortie identifie une configuration type de microplage selon les paramètres incidents reçus par le registre. Ces paramètres fournis par le microprocesseur 1 comportent l'information S1 de nature de l'image (synthétique ou non) et l'information S2 relative au type de matrice utilisé. La sortie S5 du registre de contrôle 51 est appliquée à une logique combinatoire de calcul de la microplage 52 ainsi qu'au générateur d'adresse 4. La logique 52 élabore la forme de la microplage désignée par le registre et son contenu en fonction des paramètres incidents S1 et S2 et en plus du paramètre S3 relatif à la nature du tracé, la luminosité et la couleur de ce tracé. La donnée S3 est extraite de la mémoire d'image où elle a été introduite par l'intermédiaire du processeur graphique et de la programmation de l'ensemble 1.

La logique 52 est suivie d'un circuit d'insertion de la microplage 53 dans la matrice écran 6. Le circuit 53 délivre les adresses et le contenu des lignes successives de l'écran à adresser.

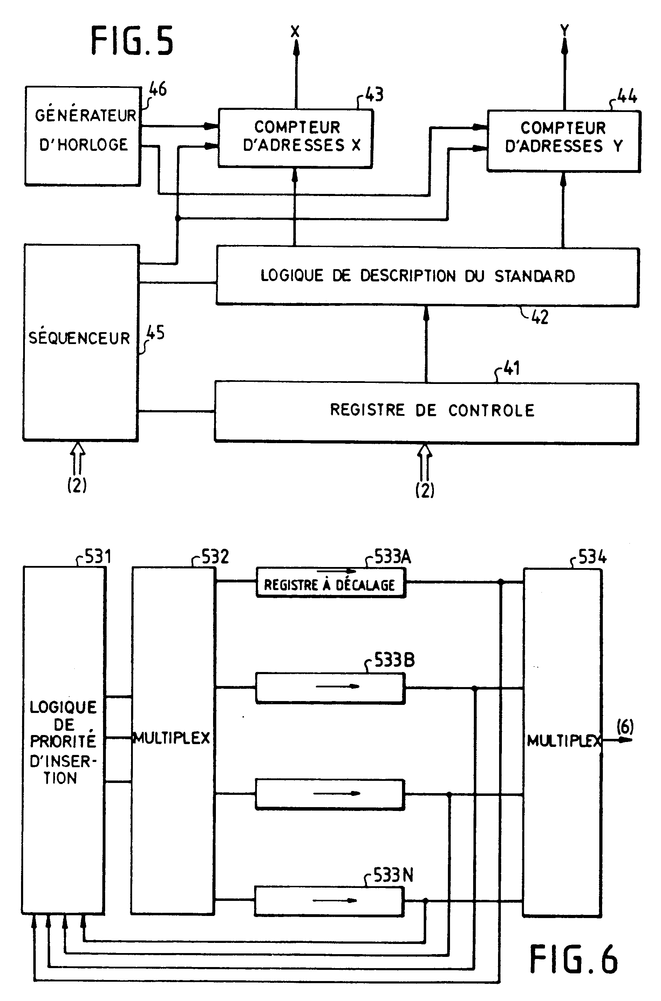

Le générateur d'adresses représenté sur la figure 5 se compose d'un registre interface 41 connecté par un bus de données au processeur graphique 2. Les données sont transférées à travers le registre 41 vers une logique de description de standard 42 qui constitue une table de conversion et qui est réalisable à l'aide de mémoires mortes programmables dites PROM. Cette logique initialise en aval les compteurs d'adresse X et Y 43 et 44. Ces compteurs peuvent être des compteurs chargeables 10 bits. Un séquenceur programmé 45 est connecté au bus de contrôle du processeur graphique 2. Il commande les circuits 41 à 44. Enfin, un générateur d'horloge à quartz 46 fixe la cadence point.

La logique combinatoire de calcul de la microplage 52 (figure 4) produit des calculs à l'aide de circuits dits PAL (abréviation de Programmable Array Logic). La figure 6 représente le circuit d'insertion 53 qui se compose d'une logique de priorité d'insertion 531 qui peut être constituée également de circuits PAL, d'un circuit multiplex 532, de registres à décalage 533A à 533N, de longueur adaptable selon l'écran utilisé, en particulier du nombre de points de la visualisation. Ces circuits registres 533A à N sont connectés en sortie à la logique 531 et à un circuit multiplex terminal 534 qui délivre les signaux destinés à la matrice de visualisation 6.

La réalisation décrite précédemment n'est pas restrictive. La technique mise en oeuvre s'applique, entre autre, à des plages d'écrans de filtres colorés différents, à des plages variables en forme et taille en fonction de la zone adressée (selon que le tracé est par exemple un trait ou une plage de couleur), à des plages dont la taille dépend du capteur (FLIR, CCD, VIDICON) et à des plages fonction des conditions d'observation (ambiance lumineuse, de jour ou de nuit, angle d'observation).

Le mode de traitement décrit par plage peut être généralisé à des plages de taille angulaire supérieure au pouvoir séparateur de l'oeil et pour des systèmes permettant d'obtenir des teintes intermédiaires dites teintes de gris.

## Revendications

1. Système de visualisation d'image couleur sur écran matriciel, comportant :
   . des moyens de gestion et de commande (1) d'un ensemble groupant :
      - un générateur (2) de l'image à visualiser,
      - une mémoire d'image (3) pour stocker l'image à visualiser,
      - des moyens de balayage (4) pour commander l'extraction de l'image de la mémoire selon un balayage matriciel déterminé en X et Y,
   . des moyens de traitement (5) de l'image extraite,
   . et des moyens de visualisation (6) de l'image traitée sur un écran matriciel,
   caractérisé en ce que lesdits moyens de gestion et de commande et ceux de traitement sont déterminés de manière que le balayage matriciel s'effectue avec prise en compte, pour chaque point image à visualiser, des données stockées pour une petite zone de l'image, dite microplage, formée d'un nombre n au moins égal à trois de pixels en X et d'un nombre m au moins égal à trois de pixels en Y, ledit point image à visualiser étant affiché sur l'écran matriciel dans une position centrée sur les coordonnées du point image à visualiser et sous forme d'une plage de plusieurs pixels.

2. Système selon la revendication 1 caractérisé en ce que la microplage est rectangulaire, carrée, ou de forme quelconque, les paramètres $n$ et $m$ définissant l'étendue de la microplage pouvant être fixes ou variables.

3. Système selon la revendication 1 ou 2, caractérisé en ce que la microplage est déterminée en fonction de plusieurs paramètres relatifs à la nature de l'image, à la nature de l'écran, à l'état de l'écran, à la définition de l'écran et au tracé.

4. Système selon l'une quelconque des revendications précédentes, caractérisé en ce que par adressage restreint d'un certain nombre de pixels parmi les pixels de la plage on produit des demi-teintes ou gris dans une couleur désirée.

5. Système selon l'une quelconque des revendications précédentes caractérisé en ce que les moyens de traitement (5) comportent un registre de contrôle (51) qui reçoit les informations relatives à la nature de l'image et de la matrice de visualisation et qui fournit un signal (SS) relatif au type de microplage à réaliser, un circuit logique combinatoire de calcul de la microplage (52) qui à partir de ce dernier signal et de l'information d'état (S3) de la matrice, détermine la microplage, et un circuit d'insertion de la microplage (53) qui délivre vers la matrice (6) les données d'adressage et d'inscription.

## Claims

1. System for displaying a colour image on a matrix screen, comprising:
   . means of management and of control (1) of an assembly bringing together:
   - a generator (2) of the image to be displayed,
   - an image memory (3) for storing the image to be displayed,
   - scanning means (4) for controlling the extraction of the image from the memory according to a defined matrix scanning in X and Y,
   . processing means (5) for the extracted image,
   . and display means (6) for the processed image on a matrix screen,
   characterised in that the said means of management and control and those of processing are determined in such a way that the matrix scanning is carried out with account being taken, for each image point to be displayed, of the data stored for a small area of the image, called microregion, formed by a number $n$ at least equal to three of pixels in X and by a number $m$ at least equal to three of pixels in Y, the said image point to be displayed being displayed on the matrix screen in a position centred on the coordinates of the image point to be displayed and in the form of a region of several pixels.

2. System according to Claim 1, characterised in that the microregion is rectangular, square or of any shape, the parameters $n$ and $m$ defining the extent of the microregion possibly being fixed or variable.

3. System according to Claim 1 or 2, characterised in that the microregion is determined on the basis of several parameters relating to the nature of the image, to the nature of the screen, to the state of the screen, to the definition of the screen and to the plot.

4. System according to any one of the preceding claims, characterised in that by restricted addressing of a certain number of pixels among the pixels of the region, half-tones or greys are produced in a desired colour.

5. System according to any one of the preceding claims, characterised in that the processing means (5) comprise a control register (51) which receives the information relating to the nature of the image and of the display matrix and which supplies a signal (55) relating to the type of microregion to be produced, a combination logic circuit for calculating the microregion (52) which, on the basis of this latter signal and of the information item on the state (53) of the matrix, determines the microregion, and a circuit for inserting the microregion (53) which delivers the addressing and writing data to the matrix (6).

## Patentansprüche

1. System zum Darstellen eines Farbbildes auf einem Matrixschirm, mit:
   - Steuer- und Befehlseinrichtungen (1) für eine Anordnung mit:
   - einem Bildgenerator (2) für das darzustellende Bild,
   - einem Bildspeicher (3) zum Speichern des darzustellenden Bildes,
   - Abtasteinrichtungen (4) zum Anweisen des Auslesens des Bildes aus dem Speicher in einer nach X und Y bestimmten Matrixabtastung,
   - Verarbeitungseinrichtungen (5) für das ausgelesene Bild,

- und Darstellungseinrichtungen (6) für das bearbeitete Bild auf einem Matrixschirm, dadurch gekennzeichnet, daß die Steuerungs- und Befehlseinrichtungen und die Verarbeitungseinrichtungen so ausgebildet sind, daß die Matrixabtastung unter Berücksichtigung für jeden darzustellenden Punkt der für eine kleine Bildzone, Mikrobereich genannt, abgespeicherten Daten erfolgt, die aus einer Anzahl n, die mindestens dem Wert Drei entspricht, von Pixeln in X-Richtung und einer Anzahl m, die mindestens dem Wert Drei entspricht, von Pixeln in Y-Richtung gebildet wird, wobei der darzustellende Bildpunkt auf dem Matrixschirm in Form eines Bereichs aus mehreren Pixeln in einer Position dargestellt wird, die in bezug auf die Koordinaten des darzustellenden Bildpunktes zentriert ist.

2. System nach Anspruch 1, dadurch gekennzeichnet, daß der Mikrobereich rechteckig, quadratisch oder von beliebiger Form ist und die Parameter n und m, die die Erstreckung des Mikrobereichs festlegen, fest oder variabel sein können.

3. System nach einem der Ansprüche 1 oder 2, dadurch gekennzeichnet, daß der Mikrobereich als Funktion mehrerer Parameter festgelegt wird, die sich auf die Art des Bildes, die Art des Schirms, die Beschaffenheit des Schirms, die Auflösung des Schirms und die graphische Darstellung beziehen.

4. System nach einem der vorstehenden Ansprüche, dadurch gekennzeichnet, daß durch auf eine gewisse Anzahl von Pixeln unter den Pixeln des Bereichs beschränkte Adressierung Halb- oder Grautöne einer gewünschten Farbe erzeugt werden.

5. System nach einem der vorstehenden Ansprüche, dadurch gekennzeichnet, daß die Verarbeitungseinrichtungen (5) ein Steuerregister (51), das Informationen betreffend die Art des Bildes und die Darstellungsmatrix empfängt und ein Signal (S5) betreffend den Typ des zu erzeugenden Mikrobildes ausgibt, eine Berechnungskombinationslogikschaltung (52) für den Mikrobereich, die abhängig vom letztgenannten Signal und abhängig von auf die Matrix bezogener Beschaffenheitsinformation (S3) den Mikrobereich festlegt, und eine Einfügeschaltung (53) für den Mikrobereich, die Adressier- und Einschreibedaten an die Matrix (6) liefert, aufweisen.

# FIG.1

FIG.2A

FIG.2B

FIG.2C

8

FIG.3A
(VERT)

33%

67%

100%

FIG.3B
(ROUGE)

33%

67%

100%

FIG.3C
(BLEU)

33%

67%

100%

# FIG. 4

# FIG.5

GÉNÉRATEUR D'HORLOGE ~46

COMPTEUR D'ADRESSES X ~43

X

COMPTEUR D'ADRESSES Y ~44

Y

LOGIQUE DE DESCRIPTION DU STANDARD ~42

SÉQUENCEUR ~45

REGISTRE DE CONTROLE ~41

(2)

(2)

LOGIQUE DE PRIORITÉ D'INSER- TION ~531

MULTIPLEX ~532

REGISTRE À DÉCALAGE ~533A

~533B

~533N

MULTIPLEX ~534

(6)

# FIG.6

11